# EUROPÄISCHE PATENTANMELDUNG

(11) **EP 1 612 720 A1**
(43) Veröffentlichungstag der Anmeldung: **04.01.2006**
(21) Anmeldenummer: 04015093.0
(22) Anmeldetag: 28.06.2004
(51) Int. Cl.: G06K 9/22, G06F 3/033

(54) **Verfahren zum Digitalisieren von handschriftlich auf Formularen erfassten Daten**

(71) Anmelder: GbD Gesellschaft für beleglose Dokumentenbearbeitung mbH, 22297 Hamburg (DE); Portal Systems Consulting GmbH, 20148 Hamburg (DE)
(72) Erfinder: Hoseas, André, 22399 Hamburg (DE); Jung, Peter, 22301 Hamburg (DE)
(74) Vertreter: Glawe, Delfs, Moll

(57) **Zusammenfassung**

Gegenstand der Erfindung ist ein Verfahren zum Digitalisieren von handschriftlich auf Formularen erfassten Daten mit den Schritten:
a) Identifizieren des Benutzers,
b) Identifizieren des benutzten Formulars,
c) Erfassen der Schreibbewegungen des zur Datenerfassung benutzten Stiftes
d) Übertragen der in a) bis c) erfassten Daten an eine Auswerteeinheit.

Erfindungsgemäß ist vorgesehen, dass die Auswertung in der Auswerteinheit folgende Schritte umfasst.
e) Texterkennung der handschriftlichen Daten durch ein OCR- und/oder ICR-Verfahren,
f) weitere Texterkennung der in Schritt e) nicht erkannten Handschrift unter Heranziehung von Schreibdaten, wobei diese Schreibdaten ausgewählt sind aus der Gruppe bestehend aus Schreibverlauf, Schreibgeschwindigkeit und Schreibdruck; und wobei für diese weitere Texterkennung in der Auswerteeinheit gespeicherte für den Benutzer charakteristische Schreibdaten herangezogen werden.

## Beschreibung

Die Erfindung betrifft ein Verfahren zum Digitalisieren von handschriftlich auf Formularen erfassten Daten gemäß dem Oberbegriff des Hauptanspruchs.

Im geschäftlichen Verkehr werden vielfach Formulare verwendet, die im Zuge einer Transaktion, wie beispielsweise dem Abschluss eines Vertrages oder der Durchführung einer Bestellung, handschriftlich ausgefüllt werden. Die handschriftliche Datenerfassung auf Formularen kommt auch in vielen anderen Bereichen zur Anwendung, beispielsweise im medizinischen Bereich.

Die Integration von auf Formularen erfassten Daten in EDVgestützte Abläufe ist aufwendig, da ein separater Datenerfassungsschritt erforderlich ist. Aus offenkundiger Vorbenutzung ist es daher bereits bekannt, die Schreibbewegungen eines Stifts auf einem Formular optisch mittels einer in den Stift integrierten Kamera zu erfassen. Das verwendete Papier ist mit einem speziellen, von der Kamera des Stiftes lesbaren Punktemuster bedruckt, so dass die Kamera die Schreibbewegungen des Stiftes verfolgen kann.

Der Erfindung liegt die Aufgabe zugrunde ein Verfahren der eingangs genannten Art zu schaffen, das eine sichere und zuverlässige Auswertung von handschriftlich auf Formularen erfassten Daten erlaubt.

Die Erfindung löst diese Aufgabe dadurch, dass die Auswertung der erfassten Daten in der Auswerteeinheit folgende Schritte umfasst:
e) Texterkennung der handschriftlichen Daten durch ein OCR- und/oder ICR-Verfahren,
f) weitere Texterkennung der in Schritt e) nicht erkannten Handschrift unter Heranziehung von Schreibdaten, wobei diese Schreibdaten ausgewählt sind aus der Gruppe bestehend aus Schreibverlauf, Schreibgeschwindigkeit und Schreibdruck; und wobei für diese weitere Texterkennung in der Auswerteeinheit gespeicherte für den Benutzer charakteristische Schreibdaten herangezogen werden.

Zunächst seien einige im Rahmen der Erfindung verwendete Begriffe erläutert. Das Digitalisieren von handschriftlich erfassten Daten bedeutet, dass diese einer elektronischen Erfassung und Weiterverarbeitung zugänglich gemacht werden.

Der Begriff Benutzer bezeichnet diejenige Person, die die Daten handschriftlich erfasst. Die Schreibbewegungen des Stiftes sind diejenigen Bewegungen, die auf dem Formular Schriftzeichen hinterlassen. Der Stift kann mit einem Drucksensor ausgerüstet sein, der erfasst, wenn tatsächlich Druck auf die Oberfläche des Formulars ausgeübt wird.

Die Auswerteeinheit ist ein von dem Stift getrenntes Datenverarbeitungssystem, das an einem entfernten, zentralen Ort aufgestellt sein kann. Die Übertragung der Daten an die Auswerteeinheit geschieht beispielsweise über das Internet, vorzugsweise werden dabei auch drahtlose Übertragungswege eingesetzt, beispielsweise unter Verwendung einer Bluetooth-Funkverbindung zwischen dem Stift und einem lokalen Datenübertragungsgerät wie beispielsweise einem Mobiltelefon sowie weiter über ein Mobilfunknetz in das Internet.

In der Auswerteeinheit wird zunächst eine herkömmliche und dem Stand der Technik entsprechende Texterkennung durch ein OCR-Verfahren (Optical Character Reading) und/oder ICR-Verfahren (Intelligent Character Reading) vorgenommen. Bei ICR-Verfahren wird neben der rein optischen Zeichenerkennung (OCR) die Häufigkeitsverteilung der verschiedenen Buchstaben, eine Kontextanalyse und eine Rechtschreibanalyse vorgenommen. Dies alles ist im Stand der Technik bekannt.

Erfindungsgemäß ist nun vorgesehen, dass im Anschluss an das OCR- und/oder ICR-Verfahren eine weitere Texterkennung nicht erkannter Handschrift unter Heranziehung von Schreibdaten erfolgt. Der Begriff Schreibdaten umfasst Informationen über die handschriftliche Aufzeichnung, die über die reine Schriftinformation (d.h. die Erfassung der auf dem Papier niedergelegten graphischen Daten) hinaus geht. Zu diesen Schreibdaten gehören insbesondere der Schreibverlauf, die Schreibgeschwindigkeit und der Schreibdruck. Der Schreibverlauf erfasst die zeitliche Reihenfolge der niedergelegten Handschrift und erkennt somit, ob beispielsweise ein Unter- oder Oberstrich eines Buchstaben zuerst oder zuletzt geschrieben wird. Die Schreibgeschwindigkeit ist die Stiftgeschwindigkeit auf dem Papier beim Schreiben bestimmter Zeichen. Der Schreibdruck ist der Anpressdruck auf das Papier und kann durch einen separaten im Stift angeordneten Druck-oder Kraftsensor erfasst werden.

Wenn im Rahmen der Erfindung von einem Erfassen der Schreibbewegungen die Rede ist, umfasst dies neben dem bloßen Schriftbild auch die genannten Schriftdaten. Erfindungsgemäß werden somit Schreibdaten, insbesondere ausgewählt aus der Gruppe bestehend aus Schreibverlauf, Schreibgeschwindigkeit und Schreibdruck, mit erfasst und an die Auswerteeinheit übertragen.

Erfindungsgemäß ist weiter vorgesehen, dass in der Auswerteeinheit charakteristische Schreibdaten entweder für jeden Benutzer separat oder für bestimmte Benutzergruppen gespeichert sind. Bevorzugt ist die Erfassung der Schreibdaten für jeden einzelnen vorgesehen Benutzer des erfindungsgemäßen Verfahrens, beispielsweise für jeden Außendienstmitarbeiter einer Versicherung. Es ist jedoch im Rahmen der Erfindung auch möglich, die vorgesehenen Benutzer zu zwei oder mehr Benutzergruppen zusammenzufassen, die sich jeweils durch bestimmte Handschrifttypen auszeichnen, so dass innerhalb jeder Benutzergruppe eine gewisse Vergleichbarkeit der Schreibdaten vorliegt. Die Auswertung dieser Schreibdaten in der Auswerteeinheit durch Vergleich mit den hinterlegten Schreibdaten erhöht die Erkennungsrate der Handschrift ganz wesentlich, da rein optisch recht ähnliche Buchstaben (beispielsweise das kleine o und a in Schreibschrift) ganz unterschiedliche Schreibverläufe aufweisen.

Im Rahmen der Erfindung ist es bevorzugt, wenn zusätzlich in der Auswerteeinheit ein Abgleich der in Text (insbesondere ASCII-Text) umgesetzten Handschrift erfolgt mit in der Auswerteeinheit gespeicherten Stammdaten, die dem Formular zugeordnet werden können. Bei solchen Stammdaten handelt es sich um Daten, die im Auswertesystem bereits vorhanden sind und auf dem Formular handschriftlich noch einmal erfasst werden. Beispielsweise werden bei einer Versicherungsgesellschaft häufig zusätzliche Verträge mit Bestandskunden abgeschlossen und zu diesem Zweck vor Ort beim Kunden ein neues Formular ausgefüllt. Da im Rahmen der Erfindung besonders bevorzugt der genaue Schriftort auf dem verwendeten Formular mit erfasst und an die Auswerteeinheit übertragen wird (beispielsweise ist das von der Stiftkamera erfasste Punktmuster eindeutig einem bestimmten Ort des Formulars zuordenbar), können die Schriftdaten in der Auswerteeinheit sofort einem bestimmten Formularfeld zugeordnet werden und es kann geprüft werden, ob zu diesem Formularfeld bereits Stammdaten zur Verfügung stehen. Wahlweise kann ein Abgleich von Stammdaten gegenüber erfassten Daten erfolgen und gegebenenfalls vom Auswertesystem zu einer manuellen Korrektur aufgefordert werden oder es können von vornherein die Stammdaten in die entsprechenden Felder des elektronisch zu erfassenden Formulars eingesetzt werden.

Im Rahmen der Erfindung ist es bevorzugt, wenn die an die Auswerteeinheit übertragenen Daten (Schreibinformationen) dort in drei Datenstrukturen gespeichert werden. Die erste Datenstruktur umfasst lediglich die Schriftinformation, d.h. den Ort der Schrift auf dem benutzten Formular. Die zweite Datenstruktur umfasst die Schriftinformation kombiniert mit dem in der Auswerteeinheit elektronisch hinterlegten Formular. Diese Datenstruktur kann beispielsweise als Graphikdatei gespeichert werden und ermöglicht einem Benutzer, das ausgefüllte Formular am Bildschirm anzuschauen und gegebenenfalls auszudrucken. Die dritte Datenstruktur umfasst die Schreibdaten, vorzugsweise Schreibverlauf, Schreibgeschwindigkeit und/oder Schreibdruck. Diese Schreibdaten können im Rahmen der Auswertung durch Abgleich mit in der Auswerteeinheit hinterlegten Schreibdaten herangezogen werden.

Bevorzugt wird der Schriftort auf dem verwendeten Formular miterfasst und an die Auswerteeinheit übertragen. Dies ist ohne Weiteres möglich, wenn die Schreibbewegungen optisch anhand eines auf dem Formular angeordneten Punktmusters erfolgen, das eine eindeutige Zuordnung des jeweiligen Stiftortes auf dem Formular erlaubt.

Ein Ausführungsbeispiel der Erfindung wird nachfolgend anhand der Zeichnung beschrieben. Diese zeigt schematisch ein Ablaufdiagramm des erfindungsgemäßen Verfahrens.

### Schritt 1: Beschreiben des Formulars

Zunächst wird das schematisch dargestellte Formular mit einem sogenannten Digitalstift ausgefüllt. Auf dem Papier ist mit einer kohlenstoffhaltigen Tinte ein Punktraster gedruckt, das jeweils 100 µm breite Punkte auf einem Raster mit einem Abstand von 0,3 mm aufweist. Jeder einzelne Punkt ist gegenüber der genauen Schnittstelle der Rastergitterlinien leicht nach oben, unten, links oder rechts verschoben, jeweils 6 x 6 Punkte sind zu einer Koordinate zusammengefasst. Durch das Muster der verschobenen Punkte ergeben sich mehr als 4 x 10²¹ eindeutige Koordinaten, so dass sich in der Praxis für eine beliebige Zahl von Formularen eine eindeutige Zuordnung des Stiftortes ergibt. Für das menschliche Auge sind diese Punkte kaum erkennbar und ergeben nur einen leicht grauen Hintergrund des Papiers.

Da die zur Erfassung des Stiftortes auf dem Formular vorgesehene Kamera im Infrarotbereich arbeitet, wird die Erfassung des Stiftortes nicht gestört durch Bedruckung des Formulars mit herkömmlicher Farbe oder mögliche bereits vorhandene handschriftliche Zeichen, solange diese nicht mit Kohlenstofffarbe aufgebracht sind.

In dem Stift ist ein Kraftsensor vorhanden, der die auf die Kugelschreibermiene des Stiftes wirkende Druckkraft erfasst und somit registriert, wenn ein Schreibvorgang auf Papier beginnt. In diesem Moment beginnt die Erfassung der Schriftinformationen und schreibt Daten, die zunächst in einem Speicher des Stiftes zwischengespeichert werden.

Bei Bedarf können Beginn und Ende des Schreibvorgangs vom Benutzer dem Stift dadurch angezeigt werden, dass ein spezielles Start- bzw. Endefeld auf dem Formular mit dem Stift markiert wird. Anhand des Punktmusters in diesem Feld erkennt der Stift, dass ein bestimmtes Formular beschrieben werden soll bzw. der Schreibvorgang beendet ist.

### Schritt 2: Datenübertragung

Nach Abschluss des Datenerfassungsvorgangs wird eine Datenübertragung von dem Stift auf eine Auswerteeinheit vorgenommen. Zu diesem Zweck kann der Stift beispielsweise in eine Docking-Station eingesetzt werden, die direkt oder beispielsweise über das Internet mit der Auswerteeinheit verbunden ist und die Daten ausliest. Alternativ kann die Datenübertragung beispielsweise über Mobilfunk stattfinden, wobei wiederum die Daten vom Stift zum Mobiltelefon über Kurzstreckenfunk wie beispielsweise Bluetooth übertragen werden können.

### Schritt 3 und Schritt 4: Datenempfang

In der Auswerteeinheit werden die Daten gespeichert, vorzugsweise werden drei Datensätze gespeichert, die die Schriftinformation, die Schriftinformation kombiniert mit dem in der Auswerteeinheit hinterlegten elektronischen Formular und die Schreibdaten umfassen.

Im Anschluss an Schritt 4 ist für einen Benutzer das elektronische Formular abrufbar mit den darin handschriftlich erfassten Daten.

### Schritt 5: ICR-Texterkennung

Es erfolgt eine herkömmliche, dem Stand der Technik entsprechende sogenannte Intelligent Character Recognition. Der Handschriftliche Text wird dabei, soweit möglich, in ASCII-Zeichen umgewandelt.

### Schritt 6: Dynamische Texterkennung

In diesem Schritt wird nicht erkannte Handschrift unter Heranziehung von Schreibdaten, nämlich Schreibverlauf, Schreibgeschwindigkeit und Schreibdruck, ausgewertet. Es werden für diesen Zweck in der Auswerteeinheit gespeicherte für den Benutzer charakteristische Schreibdaten zum Vergleich herangezogen.

### Schritt 7: Stammdatenabgleich

Im nächsten Schritt erfolgt ein Abgleich mit gegebenenfalls schon im System vorhandenen Stammdaten (Kundenadressen oder dergleichen).

### Schritt 8: Nacherfassung

Sofern nicht alle handschriftlichen Textelemente eindeutig erfasst und in ASCII-Zeichen konvertiert werden konnten, kann gegebenenfalls eine manuelle Nacherfassung stattfinden. Dabei kann einem Sachbearbeiter sowohl das handschriftlich ausgefüllte Formular als auch die durch Texterkennung in ASCII-Format umgesetzte Formularversion angezeigt und zur manuellen Nachbearbeitung angeboten werden. Im Anschluss an eine solche etwaige Nacherfassung erfolgt in Schritt 9 der Export in ein Datenverarbeitungssystem zur Speicherung und/oder weiteren Verarbeitung der erfassten Daten.

## Patentansprüche

1. Verfahren zum Digitalisieren von handschriftlich auf Formularen erfassten Daten, mit den Schritten:
a) Identifizieren des Benutzers,
b) Identifizieren des benutzten Formulars,
c) Erfassen der Schreibbewegungen des zur Datenerfassung benutzten Stiftes,
d) Übertragen der in a) bis c) erfassten Daten an eine Auswerteeinheit,
**dadurch gekennzeichnet, dass** die Auswertung in der Auswerteeinheit folgende Schritte umfasst:
e) Texterkennung der handschriftlichen Daten durch ein OCR- und/oder ICR-Verfahren,
f) weitere Texterkennung der in Schritt e) nicht erkannten Handschrift unter Heranziehung von Schreibdaten, wobei diese Schreibdaten ausgewählt sind aus der Gruppe bestehend aus Schreibverlauf, Schreibgeschwindigkeit und Schreibdruck; und wobei für diese weitere Texterkennung in der Auswerteeinheit gespeicherte für den Benutzer charakteristische Schreibdaten herangezogen werden.

2. Verfahren nach Anspruch 1, **dadurch gekennzeichnet, dass** es zusätzlich umfasst:
g) Abgleich der in e) und f) erkannten Textdaten mit in der Auswerteeinheit gespeicherten Stammdaten, die dem Formular zugeordnet werden können.

3. Verfahren nach Anspruch 1 oder 2, **dadurch gekennzeichnet, dass** die in Schritt f) herangezogenen für den Benutzer charakteristischen Schreibdaten aus einer individuellen Schriftprobe des Benutzers stammen.

4. Verfahren nach Anspruch 1 oder 2, **dadurch gekennzeichnet, dass** die in Schritt f) herangezogenen für den Benutzer charakteristischen Schreibdaten gewonnen werden durch Zuordnen einer Schriftprobe des Benutzers zu einer gespeicherten Schriftartgruppe.

5. Verfahren nach einem der Ansprüche 1 bis 4, **dadurch gekennzeichnet, dass** die in Schritt d) an die Auswerteeinheit übertragenen Daten dort in drei Datenstrukturen gespeichert werden, die jeweils umfassen:
- die Schriftinformation,
- die Schriftinformation kombiniert mit dem in der Auswerteeinheit hinterlegten Formular,
- die Schreibdaten.

6. Verfahren nach einem der Ansprüche 1 bis 5, **dadurch gekennzeichnet, dass** der Schriftort auf dem verwendeten Formular mit erfasst und an die Auswerteeinheit übertragen wird.

7. Verfahren nach einem der Ansprüche 1 bis 6, **dadurch gekenn**z**eichnet, dass** das Erfassen der Schreibbewegungen durch eine in dem verwendeten Schreibstift angeordnete optische Einrichtung erfolgt.

8. Verfahren nach Anspruch 2, **dadurch gekennzeichnet, dass** das Formular auf der Oberfläche eine optische Kennzeichnung aufweist, die mittels der optischen Einrichtung des Stiftes und der Auswerteeinheit eine eindeutige Zuordnung des Stiftortes auf dem Formular ermöglicht.
